# EUROPÄISCHE PATENTSCHRIFT

(11) **EP 0 690 064 B1**
(45) Veröffentlichungstag und Bekanntmachung des Hinweises auf die Patenterteilung: **11.07.2001**
(21) Anmeldenummer: 95810411.9
(22) Anmeldetag: 20.06.1995
(51) Int. Cl.: C07F 9/40

(54) **Verfahren zur Herstellung von sterisch gehinderten Hydroxybenzylphosphonaten**
Process for preparing sterically hindered hydroxybenzylphosphonates
Procédé de préparation d'hydroxybenzylphosphonates à empêchement stérique

(30) Priorität: 28.06.1994 CH 205894
(43) Veröffentlichungstag der Anmeldung: 03.01.1996
(73) Patentinhaber: Ciba Specialty Chemicals Holding Inc., 4057 Basel (CH)
(72) Erfinder: Engert, Thomas, D-68649 Gross-Rohrheim (DE); Stephan, Hans, D-64625 Bensheim (DE); Wolf, Walter, Dr., D-64625 Bensheim (DE)

(56) Entgegenhaltungen:
- EP-A- 0 434 606
- EP-A- 0 507 738
- DE-A- 2 312 910
- US-A- 3 155 704

## Beschreibung

Die Erfindung betrifft ein Verfahren zur Herstellung von sterisch gehinderten Hydroxybenzylphosphonaten sowie davon abgeleiteten Metallsalzen.

Sterisch gehinderte Hydroxybenzylphosphonate werden beispielsweise als Verarbeitungsstabilisatoren für Kunststoffe eingesetzt. Es ist eine Reihe von Verfahren zu ihrer Herstellung bekannt (Siehe z.B. US-A 3,790,648, US-A 3,006,945, SU-A 619 486, DE-A 2 222 708, FR-A 1 382 891).

Eine Gruppe dieser Verfahren nutzt die Reaktion mit Mannich-Basen der Formel 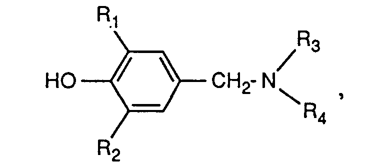 worin die Reste R₁ bis R₄ z.B. die unten beschriebenen Bedeutungen haben können.

US-A 3,155,704 sowie DE-A 2 312 910 beschreiben die Quatemierung solcher Mannich-Basen mit Methyljodid und die Umsetzung der Ammoniumsalze mit Trialkylphosphiten. Methyljodid ist aber zum einen relativ teuer und zum anderen stark krebserregend und demzufolge nur unter strengen Sicherheitsvorkehrungen zu handhaben.

Nach US-A 3,790,648 setzt man die Mannich-Basen in Gegenwart von Alkalimetallen bzw. deren Hydriden oder Amiden mit Dialkylphosphiten um. Infolge der besonderen Anfälligkeit von Ausgangsstoffen und Produkten in Gegenwart starker Alkalien bilden sich verfärbte Produkte, die sich zwar nach US-A 4,263,232 durch Additive vermeiden lassen, aber auch die Ausbeuten lassen zu wünschen übrig. Außerdem besteht die Gefahr der unerwünschten Verseifung der Produkte.

DE-A 2 456 532 und V.V. Ovchinnikow et al. in Zh. Obshch. Khim. **51,** 999 (1981) beschreiben die direkte Umsetzung von Mannichbasen mit Tri- bzw Dialkylphosphiten. Ein Nachteil dieser Verfahrensweise ist die lange Reaktionszeit.

In DE-A 2 312 910 sind auch Alternativen zu den Mannich-Basen beschrieben, in denen z.B. an Stelle der Aminogruppe Bromid oder Acetat tritt. Die Verbindungen werden vor der Umsetzung mit Phosphiten isoliert, und die Gesamtausbeuten sind wesentlich geringer als bei Verwendung der entsprechenden Mannich-Basen.

Bekannt ist ferner (EP-A 507,738), daß man Hydroxybenzylphosphonate durch Umsetzung von Mannichbasen mit Trialkylphosphiten in Gegenwart von Carbonsäureanhydriden herstellen kann.

Weiter ist aus US-A 5,157,141 ein Verfahren bekannt, bei dem man in Ausbeuten von um 80% Hydroxybenzylphosphonate durch Umsetzung von Phenol, Formaldehyd und Amin und direkter Zugabe von Trialkylphosphit erhält.

Es wurde nun gefunden, daß ein sehr vorteilhafteres Gesamtverfahren entsteht, wenn man als Zwischenprodukt ein Salz der Mannichbase herstellt und das Reaktionswasser zwischen den beiden Stufen entfernt. Dadurch wird die Ausbeute erheblich gesteigert. Eine Isolation oder Reinigung der Mannichbase bzw. deren Salz ist dabei nicht vonnöten. Das Verfahren benutzt die folgenden Reaktionen:

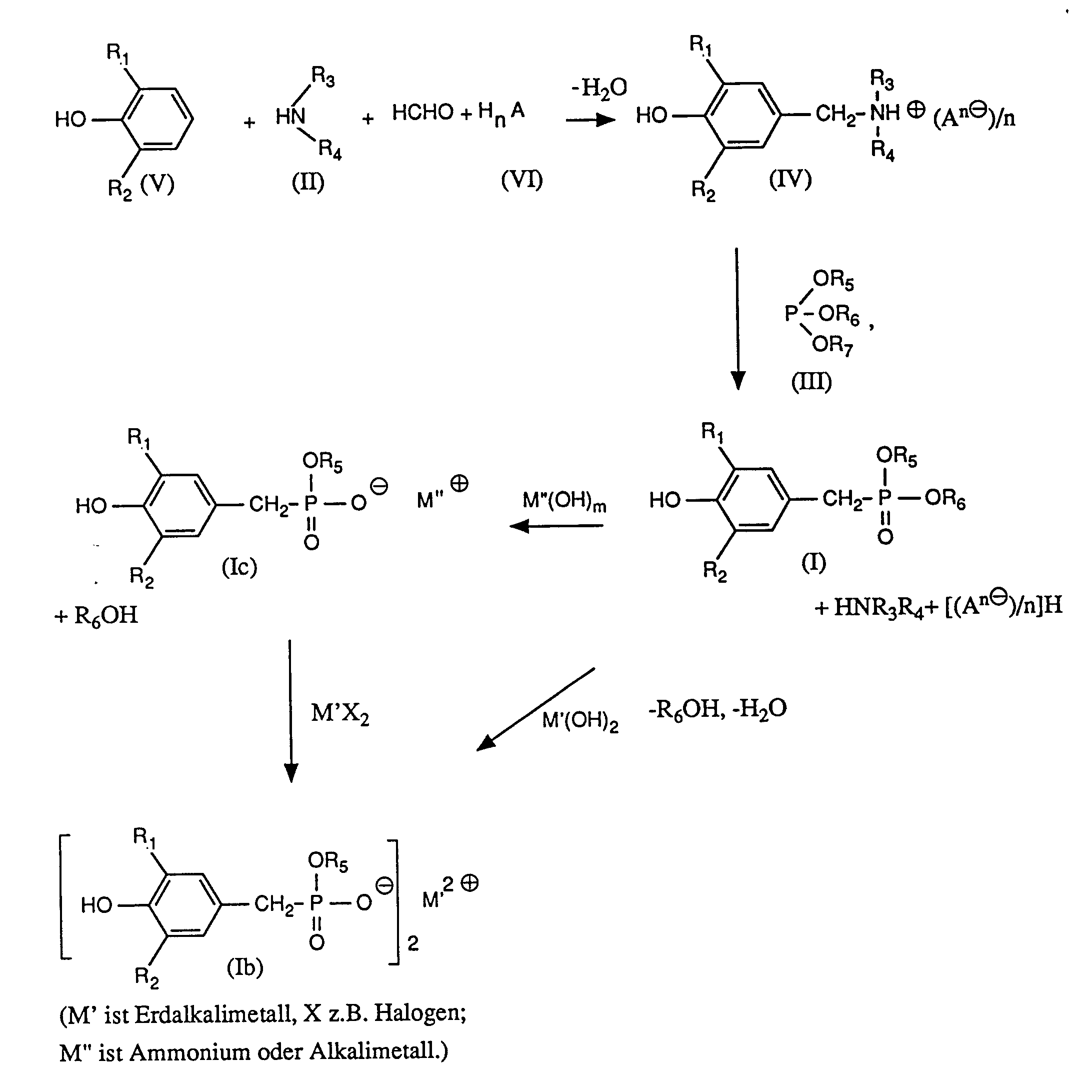

Im einzelnen bezieht sich das Verfahren auf die Herstellung von Hydroxybenzylphosphonaten der Formel I 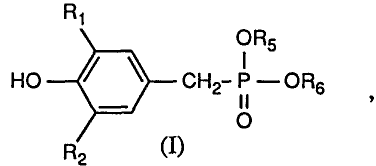 indem
**A)** ein Phenol der Formel II 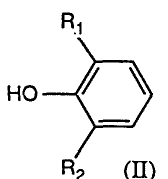 mit einem Amin der Formel III 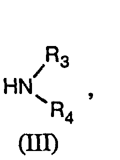 Formaldhyd oder Paraformaldehyd und einer Protonensaüre Hₙ A zu einem salz der Formel IV 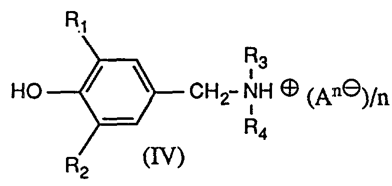 umgesetzt wird,
**B)** das entstehende Reaktionswasser abdestilliert wird, und
**C)** die Reaktionsmischung oder das daraus isolierte Salz IV mit einem Trialkylphosphit der Formel 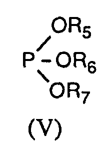 umgesetzt wird.

Dabei bedeuten
HₙA eine organische oder anorganische Säure mit n (1, 2, 3 oder 4) Protonen,
R₁ und R₂ unabhängig voneinander C₁-C₁₂-Alkyl oder C₅-C₇-Cycloalkyl,
R₃ und R₄ unabhängig voneinander C₁-C₁₂-Alkyl, oder sie bilden zusammen mit dem an sie gebundenen N-Atom einen Piperidinyl- oder Morpholinylrest, und
R₅, R₆ und R₇ unabhängig voneinander C₁-C₄-Alkyl.

Das Verfahren dient auch der Herstellung von Salzen der Formel Ia, wobei eine erhaltene Verbindung der Formel I 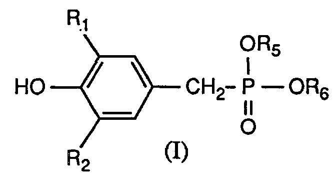 mit einer Base M(OH)ₘ, worin m 1 oder 2 ist und M Ammonium, Alkali- oder Erdalkalimetall bedeutet, zu einem Salz der Formel Ia 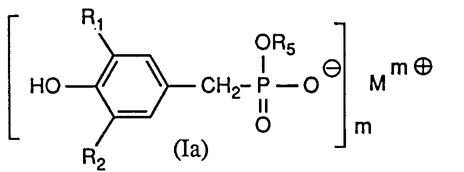 umgesetzt (verseift) wird, das gegebenenfalls (wenn M = Alkalimetall oder Ammonium und m = 1) mit einem Salz eines Erdalkalimetalls zu einem weiteren Salz der Formel Ia umgesetzt wird, worin M für Erdalkalimetall steht und m 2 ist.

Stellen in obigen Formeln R₁, R₂, R₃, und R₄ C₁-C₁₂-Alkyl dar, so handelt es sich dabei um verzweigte oder unverzweigte Reste. Beispiele hierfür sind Methyl, Ethyl, Propyl, Isopropyl, n-Butyl, Isobutyl, t-Butyl, Pentyl, Isopentyl, Hexyl, Heptyl, 3-Heptyl, Octyl, 2-Ethylhexyl, Nonyl, Decyl, Undecyl, Dodecyl, 2-Ethylbutyl, 1-Methylpentyl, 1,3-Dimethylbutyl, 1,1,3,3-Tetramethylbutyl, 1-Methylhexyl, Isoheptyl, 1-Methylheptyl, 1,1,3-Trimethylhexyl oder 1-Methylundecyl. Sind R₅, R₆ und R₇ C₁-C₄-Alkyl, kommen dafür z.B. Methyl, Ethyl, Propyl, Isopropyl, n-Butyl, Isobutyl und t-Butyl in Betracht.

R₁ und R₂ als C₅-C₇-Cycloalkyl können Cyclopentyl, Cyclohexyl oder Cycloheptyl sein.

Geeignete Protonensäuren HₙA sind beispielsweise anorganische oder organische Säuren,wie z.B. Salzsäure, Schwefelsäure, Phosphorsäure, Methansulfonsäure, Methanphosphonsäure, p-Toluolsulfonsäure oder Carbonsäuren. Bevorzugt werden Säuren mit 1 bis 3 Protonen (n = 1, 2 oder 3) verwendet.

Geeignete Carbonsäuren sind monovalente wie Essigsäure, Propionsäure, Buttersäure, Valeriansäure, Pivalinsäure, Hexansäure, Önanthsäure, Octansäure, Neodecansäure, 2-Ethylhexansäure, Pelargonsäure, Decansäure, Undecansäure, Dodecansäure, Tridecansäure, Myristylsäure, Palmitinsäure, Isostearinsäure, Stearinsäure, 12-Hydroxystearinsäure, Behensäure, Benzoesäure, p-tert-Butylbenzoesäure, Dimethylhydroxybenzoesäure, 3,5-Di-tert-butyl-4-hydroxybenzoesäure, Tolylsäure, Dimethylbenzoesäure, Ethylbenzoesäure, n-Propylbenzoesäure, Salicylsäure, p-tert-Octylsalicylsäure, und Sorbinsäure; divalente wie Oxalsäure, Malonsäure, Bernsteinsäure, Glutarsäure, Adipinsäure, Fumarsäure, Pentan-1,5-dicarbonsäure, Hexan-1,6-dicarbonsäure, Heptan-1,7-dicarbonsäure, Octan-1,8-dicarbonsäure, Phthalsäure, Isophthalsäure, Terephthalsäure und Hydroxyphthalsäure; und der Di- oder Triester der tri- oder tetravalenten Carbonsäuren, wie Hemimellithsäure, Trimellithsäure, Pyromellithsäure, Zitronensäure. Besonders bevorzugt werden niedere Carbonsäuren verwendet, z.B. der Formel RCO-OH, worin R C₁-C₁₂-Alkyl ist. Beispiele dafür sind Essigsäure und Pivalinsäure.

Schritt **A** wird zweckmäßig bei 0 bis 60°C durchgeführt, vorzugsweise mit besonderer Rücksicht darauf, daß die Temperatur nicht über 60°C steigt. Bei Stufe A werden vorteilhaft dem Phenol mindestens aequimolare Mengen an Amin, Formaldehyd und Säure eingesetzt. Ein Überschuß von bis zu 20%, insbesondere bis zu 10% eines oder mehrerer dieser Reaktionsteilnehmer kann vorteilhaft sein.

Schritt **B**: Die Destillation geschieht vorzugsweise bei konstanter Temperatur von nicht über 60°C, d.h. zum Abdestillieren des Wassers wird Unterdruck angelegt. Wird in einem Lösungsmittel gearbeitet, kann das Reaktionswasser auch durch ein Schleppmittel oder azeotrop abdestilliert werden. Bevorzugt ist die Destillation bei vermindertem Druck. Der Druck kann zum Beispiel im Bereich 5 bis 100 Torr (ca. 7 bis 135 mbar) liegen.

Schritt **C**: Das Zwischenprodukt IV wird vorzugsweise ohne Isolierung bzw. ohne Reinigung direkt mit dem Phophorigsäureester V umgesetzt, d.h. z.B. nach Abdestillieren des Reaktionswassers wird direkt zu der entstanden Mischung eine mindestens aequimolare Menge eines Trialkylphosphits zugegeben. Es kann auch von Vorteil sein, hier einen geringen Überschuß, beispielsweise 5 bis 20%, insbesondere 10% des Phosphits einzusetzen.

Die Reaktionstemperaturen liegen bei diesem Schritt C zweckmäßig bei Raumtemperatur bis 150°C, vorzugsweise beginnt man bei Raumtemperatur bis 60°C und heizt dann langsam in der Weise weiter auf, daß die Nebenprodukte abdestillieren. Auch bei diesem Teil des Verfahrens kann Unterdruck angelegt werden, damit gegebenenfalls schwerer flüchtige Nebenprodukte abdestillieren.

Schritt C kann somit bei Normaldruck oder vermindertem Druck durchgeführt werden. Wird bei vermindertem Druck gearbeitet, dann liegt dieser vorzugsweise bei 500 bis 150 mbar.

Nach dem Schritt C werden in einer bevorzugten Ausführungsform die Nebenprodukte bei einer Temperatur von 100 bis 170°C und einem Druck von 5 bis 20 mbar destillativ entfernt.

Man arbeitet bevorzugt ohne Lösungsmittel. Die Gegenwart eines organischen, insbesondere aprotischen, vorzugsweise hochsiedenden, Lösungsmittels kann jedoch zweckmäßig sein. Letzeres kann unpolar oder polar sein. Beispiele für polare aprotische Lösungsmittel sind Dimethylformamid, Dimethylacetamid und N-Methylpyrrolidon. Bevorzugte Lösungsmittel sind z.B. aliphatische Kohlenwasserstoffe wie Heptan, Octan, Cyclohexan, Decalin, Mineralöldestillate wie Petrolether, Ligroin, Kerosin, aromatische Kohlenwasserstoffe wie Benzol, Toluol oder Xylole, Ester wie Essigsäurethylester, Ether wie Dibutylether oder Tetrahydrofuran oder Mischungen aus den genannten Lösungsmitteln. Insbesondere verwendet man hochsiedende aliphatische oder aromatische Lösungsmittel.

Besonders bevorzugt sind davon Petroletherfraktionen, vor allem die Petroletherfraktionen 100/140 (Naphthabenzin) und 160/200, sowie Essigsäureethylester.

Wird ein Lösungsmittel verwendet, kann dies bei Stufe **A** oder **C** oder bei beiden geschehen. Im letzteren Fall kann entweder bei beiden Stufen dasselbe oder in jeder Stufe ein anderes Lösungsmittel eingesetzt werden. Bei zwei verschiedenen Lösungsmitteln destilliert man vor Stufe **C** das in Stufe **A** verwendete Lösungsmittel ganz oder teilweise ab, sofern nicht das Salz der Formel IV isoliert wird.

Das Verfahren wird besonders zur Herstellung von Verbindungen der Formel I eingesetzt, worin R₁ und R₂ unabhängig voneinander C₁-C₆-Alkyl oder Cyclohexyl sind. In Formel III sind R₃ und R₄ bevorzugt unabhängig voneinander C₁-C₆-Alkyl, oder sie bilden zusammen mit dem an sie gebundenen N-Atom einen Piperidinyl- oder Morpholinylrest. In Formel I ist vorzugsweise mindestens einer der Reste R₁ und R₂ tert-Butyl.

Bevorzugt werden mit dem Verfahren Verbindungen der Formel I hergestellt, worin R₁ und R₂ tert-Butylreste sind.

Die Salze der Formel Ia werden durch Umsetzung mit Base erhalten. Als Basen M(OH)ₘ kommen beispielsweise NaOH, KOH, Ca(OH)₂ oder wäßriger Ammoniak ("NH₄OH") in Frage. Besonders zweckmäßig sind wäßrige Laugen wie Natron- oder Kalilauge. Durch weitere Reaktionen von Verbindungen der Formel Ia, worin m 1 ist, mit Erdalkalisalzen, besonders mit Erdalkalihalogeniden, können Salze der Formel Ia erhalten werden, worin M Erdalkalimetall und m 2 ist.

Der Verseifungsschritt verläuft nach in der organischen Chemie geläufigen Methoden. Man geht zweckmäßig so vor, daß die Verbindung der Formel I mit einem Überschuß der wäßrigen Lauge einige Stunden, wenn nötig unter Druckanwendung, bei einer Temperatur von 80 bis 150 °C gehalten wird. Vorteilhaft wird mit konzentrierter Lauge bei Überdruck ca. 3 bis 5 Stunden lang auf ca. 120°C erhitzt, wobei der Druck je nach Lösungsmittelanteil verschieden sein kann. Das entstandene Salz fällt entweder beim Abkühlen oder nach Eindampfen aus und kann für gewöhnlich abfiltriert oder in anderer Weise isoliert werden.

Verbindungen der Formel Ia mit M = Erdalkalimetall sind auch aus den Alkali- oder Ammoniumsalzen erhältlich, indem diese z.B, wenn nötig unter Erwärmen, in Wasser gelöst werden und mit einem Erdalkalihalogenid das Erdalkalimetallsalz der Formel Ia gebildet wird, das, nötigenfalls nach Einengen, ausfällt und abfiltriert werden kann. Bevorzugt wird mit CaCl₂ das Calciumsalz gebildet.

Die Aufarbeitung der Produkte der Formel I erfolgt nach geläufigen Verfahren, wie Auswaschen der wasserlöslichen Nebenprodukte, Umkristallisieren etc. In der Regel versetzt man das Reaktionsgemisch mit Wasser, um wasserlösliche Reaktionsprodukte zu entfernen. Das gewünschte Produkt fällt dabei oder nach Entfernen des Wassers aus dem Reaktionsgemisch aus. Es kann dann abgesaugt und mit dem benutzten Lösungsmittel gewaschen werden.

Die nach dem erfindungsgemäßen Verfahren hergestellten Verbindungen der Formeln I und Ia sind als Stabilisatoren für eine Vielzahl von organischen Monomeren und Polymeren gegen thermischen, oxidativen und/oder photoinduzierten Abbau geeignet, wie z.B. in US-A 3,280,070, US-A 3,281,505 und US-A 3,367,870 beschrieben.

Die folgenden Beispiele erläutern die Erfindung weiter, ohne sie jedoch zu beschränken. Teile- und Prozentangaben beziehen sich - wie auch in der übrigen Beschreibung - sofern nicht anders angegeben, auf das Gewicht.

### Beispiel 1:

In einem Reaktionsgefäß mit Rührer, Thermometer, Kühler, Tropftrichter und Inertgasspülung werden 63 g Paraformaldehyd (2,1 mol), 120,1g Eisessig (2,0 mol) und 412,7 g 2,6-Di-tert-butylphenol (2,0 mol) vorgelegt. Beginnend bei 300 mbar und einer Temperatur von 20°C werden innerhalb 20 Minuten 94,7 g (2,1 mol) Dimethylamin unter Niveau eingeleitet. Dabei steigt die Temperatur auf 53°C. Anschließend wird auf 60°C erwärmt, 30 min bei dieser Temperatur gerührt und, wieder beginnend bei 300 mbar, über 2 h das Reaktionswasser abdestilliert. Am Ende der Destillation herrschen ein Druck von 100 mbar und eine Temperatur von 85°C.

Zu dem so erhaltenen (640 g) Mannichbasensalz werden bei 50°C 372 g (2,24 mol) Triethylphosphit gegeben und innerhalb 45 min unter Rühren auf 83°C erwärmt. Anschließend wird auf 130°C aufgeheizt und 3 h lang bei dieser Temperatur gehalten. Dabei werden bei 200 bis 150 mbar die entstehenden Nebenprodukte abdestilliert. Es werden 300 ml Petrolether 100/140 zugegeben und in zwei Portionen geteilt, die mit insgesamt 500 ml Wasser gewaschen werden. Beim Abkühlen auf Raumtemperatur kristallisiert das Produkt aus, das abgesaugt und mit wenig Petrolether 100/140 gewaschen wird. Nach dem Trocknen erhält man 665 g (93,3% d.Th.)
4-Hydroxy-3,5-di-tert-butylbenzyl-phosphonsäurediethylester als farbloses Produkt in einer Reinheit von 99,9%. Smp.: 119-121 °C.

### Beispiel 2:

In einem Reaktionsgefäß mit Rührer, Thermometer, Kühler, Tropftrichter und Inertgasspülung werden bei Raumtemperatur 17,2 g Paraformaldehyd (0,573 mol), 38,7 g Eisessig (0,644 mol) und 103,2 g 2,6-Di-tert-butylphenol (0,5 mol) vorgelegt und mit 51,9 g (0,61 mol) Piperidin versetzt. Die Mischung wird 45 Minuten auf 60-64 °C erwärmt. Bei 300 mbar und 77°C wird das Reaktionswasser abdestilliert.

Nach dem Erkalten erhält man das Mannichbasensalz in Form heller Kristalle.

Das Salz wird wie oben unter Beispiel 1 mit Triethylphosphit umgesetzt und ebenso aufgearbeitet.

### Beispiel 3:

In einem Reaktionsgefäß mit Rührer, Thermometer, Kühler, Tropftrichter und Inertgasspülung werden 31,52 g Paraformaldehyd (1,05 mol), 102,1g Pivalinsäure (1,0 mol) und 206,3 g 2,6-Di-tert-butylphenol (1 mol) bei Raumtemperatur vorgelegt. Bei 10°C werden innerhalb von 12 Minuten 47,3 g (1,05 mol) Dimethylamin unter Niveau eingeleitet. Dabei steigt die Temperatur auf 40°C. Anschließend wird auf 60°C erwärmt, 20 min bei dieser Temperatur gerührt und bei 200 mbar und 80°C das Reaktionswasser abdestilliert.

Zu der so erhaltenen Reaktionsmischung werden bei Raumtemperatur 186 g (1,12 mol) Triethylphosphit gegeben, und es wird unter Rühren auf 95°C erwärmt, bis eine Lösung entstanden ist. Danach werden bei 150 mbar und 120°C die entstehenden Nebenprodukte abdestilliert.
Nach 3 h wird Petrolether 100/140 zugegeben.
Beim Abkühlen auf Raumtemperatur kristallisiert das Produkt aus, das abgesaugt und mit wenig Petrolether 100/140 gewaschen wird. Nach dem Trocknen erhält man 296,3 g (83,1% d.Th.) 4-Hydroxy-3,5-di-tert-butylbenzyl-phosphonsäurediethylester als farbloses Produkt in einer Reinheit von >99%. Smp.: 119-121 °C.

### Beispiel 4:

In einem Reaktionsgefäß mit Rührer, Thermometer, Kühler, Tropftrichter und Inertgasspülung werden 35,3 g 89,3 %iger Paraformaldehyd (1,05 mol), 61,3 g Eisessig (1,02 mol) und 100 g eines hochsiedenden aromatenfreien Benzins (Siedebereich 160 bis 200°C) bei Raumtemperatur vorgelegt. Das Reaktionsgefäß wird evakuiert, und es werden bei einer Temperatur von 20°C, die langsam auf 43°C ansteigt, und bei einem Druck von 328 mbar, der auf 532 mbar ansteigt, während ca. 10 min 43,3 g Dimethylamin (1,05 mol) über Niveau zugegeben. Dann wird auf 50°C aufgeheizt, und es werden 206,3 g (1 mol) 2,6-Di-tert-butylphenol zugegeben. Die Reaktionsmischung wird auf 93°C erhitzt und das Reaktionswasser abdestilliert, während der Druck von 436 auf 250 mbar fällt.

Dann werden bei 900 mbar und 82 bis 75°C 186,1 g Triethylphosphit zugetropft, bei 75 bis 77°C gerührt und bei 400 mbar auf 107°C aufgeheizt. Bei einer Sumpftemperatur von 107 bis 153°C und einem Druck von 400 bis 15 mbar werden anschließend die leichtflüchtigen Nebenprodukte abdestilliert, erneut 250 g des hochsiedenden Benzins zugegeben und langsam auf 20°C abgekühlt. Dabei kristallisiert das Produkt, das abgesaugt, mit wenig Lösungsmittel gewaschen und getrocknet wird.

### Ausbeute 336,0 g (94% d.Th.)

4-Hydroxy-3,5-di-tert-butylbenzyl-phosphonsäurediethylester.

## Patentansprüche

1. Verfahren zur Herstellung von Hydroxybenzylphosphonaten der Formel (I) 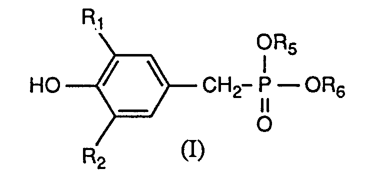 dadurch gekennzeichnet, daß
**A)** ein Phenol der Formel II 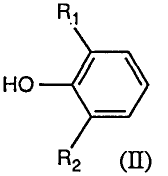 mit einem Amin der Formel III 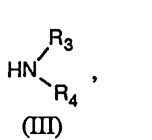 Formaldehyd oder Paraformaldehyd und einer Protonensäure HₙA zu einem Salz der Formel IV 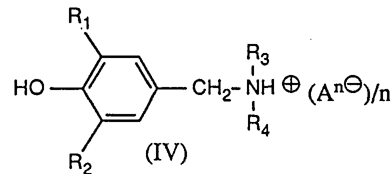 umgesetzt wird,
**B)** das entstehende Reaktionswasser abdestilliert wird, und
**C)** die Reaktionsmischung oder das daraus isolierte Salz IV mit einem Trialkylphosphit der Formel 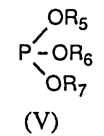 umgesetzt wird, wobei
HₙA eine organische oder anorganische Säure mit n Protonen ist,
n 1, 2, 3 oder 4 ist,
R₁ und R₂ unabhängig voneinander C₁-C₁₂-Alkyl oder C₅-C₇-Cycloalkyl sind,
R₃ und R₄ unabhängig voneinander C₁-C₁₂-Alkyl sind oder mit dem an sie gebundenen
N-Atom zusammen einen Piperidinyl- oder Morpholinylrest bilden, und
R₅, R₆ und R₇ unabhängig voneinander C₁-C₄-Alkyl sind.

2. Verfahren nach Anspruch 1, dadurch gekennzeichnet, daß eine erhaltene Verbindung der Formel I 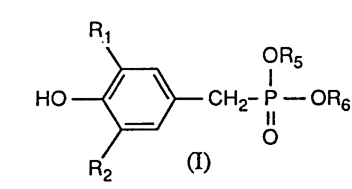 mit einer Base M(OH)ₘ zu einem Salz der Formel Ia 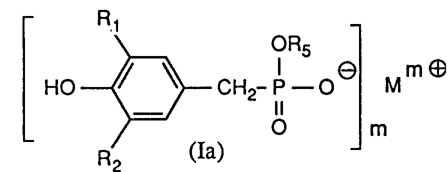 umgesetzt wird, worin M Ammonium, Alkali- oder Erdalkalimetall bedeutet und m 1 oder 2 ist.

3. Verfahren nach Anspruch 2, dadurch gekennzeichnet, daß eine erhaltene Verbindung der Formel Ia 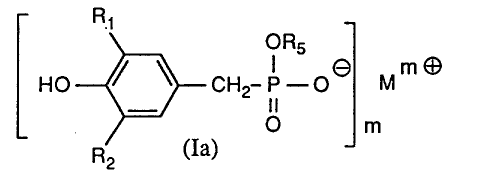 worin M für Alkalimetall oder Ammonium steht, mit einem Erdalkalimetallsalz zu einem weiteren Salz der Formel Ia umgesetzt wird, worin m 2 ist und M für Erdalkalimetall steht.

4. Verfahren nach Anspruch **1,** dadurch gekennzeichnet, daß HₙA für eine Carbonsäure RCO-OH steht, worin R C₁-C₁₂-Alkyl ist.

5. Verfahren nach Anspruch **4,** dadurch gekennzeichnet, daß die bei Stufe C entstehenden Nebenprodukte
HNR₃R₄ und RCO-OR₇
destillativ entfernt werden.

6. Verfahren nach Anspruch **1,** dadurch gekennzeichnet, daß R₁ und R₂ unabhängig voneinander C₁-C₆-Alkyl oder Cyclohexyl sind, und
R₃ und R₄ unabhängig voneinander C₁-C₆-Alkyl sind oder zusammen mit dem an sie gebundenen N-Atom einen Piperidinyl- oder Morpholinylrest bilden.

7. Verfahren nach Anspruch **1**, dadurch gekennzeichnet, daß R₁ und R₂ tert-Butylreste sind.

8. Verfahren nach Anspruch **1**, dadurch gekennzeichnet, daß die Reaktionstemperatur bei Schritt A bei 0 bis 60°C liegt.

9. Verfahren nach Anspruch **8**, dadurch gekennzeichnet, daß die Reaktionstemperatur bei Schritt A bei 30 bis 60°C liegt.

10. Verfahren nach Anspruch **1**, dadurch gekennzeichnet, daß die Reaktionstemperatur bei Schritt C bei 100 bis 140°C liegt.

11. Verfahren nach Anspruch **1**, dadurch gekennzeichnet, daß es ohne Lösungsmittel durchgeführt wird.

12. Verfahren nach Anspruch **1,** dadurch gekennzeichnet, daß Schritt **A** oder/und Schritt **C** in einem Lösungsmittel durchgeführt wird.

13. Verfahren nach Anspruch **1**, dadurch gekennzeichnet, daß die Umsetzungen in einem hochsiedenden Lösungsmittel durchgeführt werden.

14. Verfahren nach Anspruch **1**, dadurch gekennzeichnet, daß die Umsetzungen in einem hochsiedenden aliphatischen oder aromatischen Lösungsmittel durchgeführt werden.

15. Verfahren nach Anspruch **1**, dadurch gekennzeichnet, daß Schritt **C** bei Normaldruck oder vermindertem Druck durchgeführt wird.

16. Verfahren nach Anspruch **1**, dadurch gekennzeichnet, daß bei Schritt **C** der Druck bei 500 bis 150 mbar liegt.

17. Verfahren nach Anspruch **1**, dadurch gekennzeichnet, daß nach Schritt **C** die Nebenprodukte bei einer Temperatur von 100 bis 170°C und einem Druck von 5 bis 20 mbar destillativ entfernt werden.

## Claims

1. A process for the preparation of a hydroxybenzylphosphonate of the formula (I) 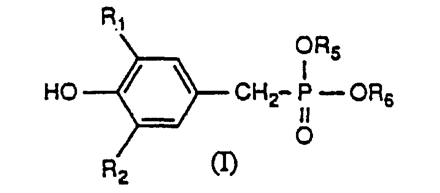 which comprises
**A)** reacting a phenol of the formula II 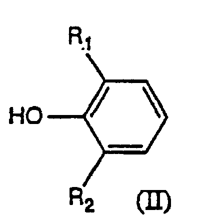 with an amine of the formula III 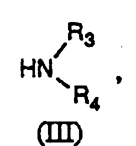 formaldehyde or paraformaldehyde and a protonic acid HₙA to give a salt of the formula IV 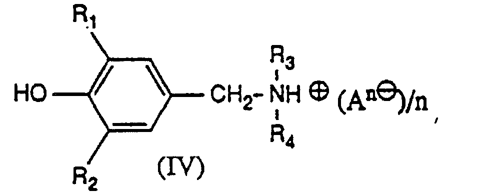
**B**) distilling off the water of reaction which forms, and
**C)** reacting the reaction mixture, or the salt IV isolated therefrom, with a trialkyl phosphite of the formula 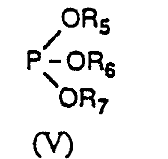 in which
HₙA is an organic or inorganic acid having n protons,
n is 1, 2, 3 or 4,
R₁ and R₂ independently of one another are C₁-C₁₂alkyl or C₅-C₇cycloalkyl,
R₃ and R₄ independently of one another are C₁-C₁₂alkyl or form, together with the nitrogen atom attached to them, a piperidyl or morpholinyl radical, and
R₅, R₆ and R₇ independently of one another are C₁-C₄alkyl.

2. A process according to claim 1, wherein a resulting compound of the formula I 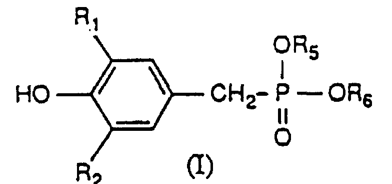 is reacted with a base M(OH)ₘ to give a salt of the formula Ia 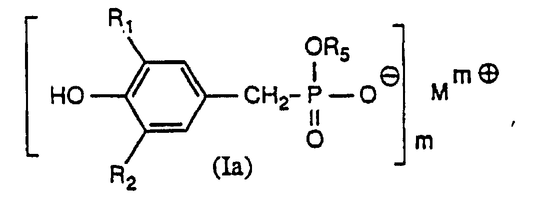 in which M is ammonium, alkali metal or alkaline earth metal and m is 1 or 2.

3. A process according to claim 2, wherein a resulting compound of the formula Ia 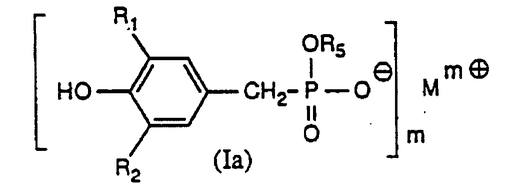 in which M is alkali metal or ammonium is reacted with alkaline earth metal salt to give a further salt of the formula Ia in which m is 2 and M is alkaline earth metal.

4. A process according to claim 1, wherein HₙA is a carboxylic acid RCO-OH in which R is C₁-C₁₂alkyl.

5. A process according to claim 4, wherein the by-products which form in stage C, HNR₃R₄ and RCO-OR₇, are removed by distillation.

6. A process according to claim 1, wherein R₁ and R₂ independently of one another are C₁-C₆alkyl or cyclohexyl, and
R₃ and R₄ independently of one another are C₁-C₆alkyl or form, together with the nitrogen atom attached to them, a piperidyl or morpholinyl radical.

7. A process according to claim 1, wherein R₁ and R₂ are tert-butyl radicals.

8. A process according to claim 1, wherein the reaction temperature in step A is from 0 to 60°C.

9. A process according to claim 8, wherein the reaction temperature in step **A** is from 30 to 60°C.

10. A process according to claim 1, wherein the reaction temperature in step **C** is from 100 to 140°C.

11. A process according to claim 1, which is carried out without solvent.

12. A process according to claim 1, wherein step **A** and/or step **C** are carried out in a solvent.

13. A process according to claim 1, wherein the reactions are carried out in a high-boiling solvent.

14. A process according to claim 1, wherein the reactions are carried out in a high-boiling aliphatic or aromatic solvent.

15. A process according to claim 1, wherein step **C** is carried out at atmospheric pressure or reduced pressure.

16. A process according to claim 1, wherein the pressure in step **C** is from 500 to 150 mbar.

17. A process according to claim 1, wherein after step **C** the by-products are removed by distillation at a temperature of from 100 to 170°C under a pressure of from 5 to 20 mbar.

## Revendications

1. Procédé pour la préparation d'hydroxybenzylphosphonates de formule (I) 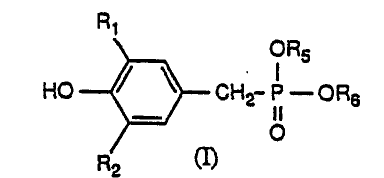 caractérisé en ce que,
A) on met à réagir un phénol de formule II 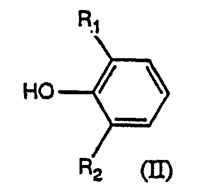 avec une amine de formule III 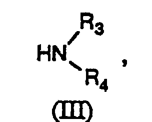 le formaldéhyde ou le paraformaldéhyde et un acide protoné HₙA pour obtenir un sel de formule IV 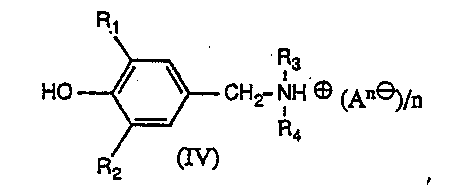
B) on distille l'eau de réaction produite, et
C) on met à réagir le mélange réactionnel et le sel IV isolé de celui-ci avec un phosphite de trialkyle de formule 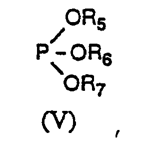 dans laquelle
HₙA est un acide organique ou inorganique avec n (1, 2, 3 ou 4) protons,
R₁ et R₂ représentent indépendamment l'un de l'autre un groupe alkyle en C₁ à C₁₂ ou cycloalkyle en C₅ à C₇,
R₃ et R₄ représentent indépendamment l'un de l'autre un groupe alkyle en C₁ à C₁₂ ou ils forment ensemble avec l'atome d'azote avec lequel ils sont liés un résidu pipéridinyle ou morpholinyle, et
R₅, R₆ et R₇ représentent indépendamment les uns des autres un groupe alkyle en C₁ à C₄.

2. Procédé selon la revendication 1, caractérisé en ce qu'on met à réagir un composé obtenu de formule I 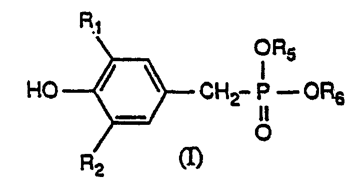 avec une base M(OH)ₘ, pour obtenir un sel de formule Ia 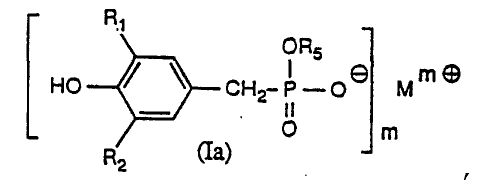 dans laquelle M représente l'ammonium, un métal alcalin ou alcalino-terreux et m est 1 ou 2.

3. Procédé selon la revendication 2, caractérisé en ce qu'on met à réagir un composé obtenu de formule Ia 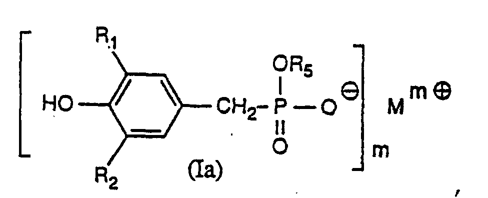 dans lequel M représente l'ammonium ou un métal alcalin, avec un sel d'un métal alcalino-terreux pour obtenir un autre sel de formule Ia dans lequel m est 2 et M représente un métal alcalino-terreux.

4. Procédé selon la revendication 1, caractérisé en ce que, HₙA représente un acide carboxylique RCO-OH, dans lequel R est un groupe alkyle en C₁ à C₁₂.

5. Procédé selon la revendication 4, caractérisé en ce qu'on élimine les produits secondaires produits à l'étape C
HNR₃R₄ et RCO-OR₇
par distillation.

6. Procédé selon la revendication 1, caractérisé en ce que R₁ et R₂ sont indépendamment l'un de l'autre un groupe alkyle en C₁ à C₆ ou cyclohexyle, et
R₃ et R₄ sont indépendamment l'un de l'autre un groupe alkyle en C₁ à C₆ ou forment ensemble avec l'atome d'azote auquel ils sont liés un résidu pipéridinyle ou morpholinyle.

7. Procédé selon la revendication 1, caractérisé en ce que R₁ et R₂ sont des groupes tert.-butyle.

8. Procédé selon la revendication 1, caractérisé en ce que la température de réaction se situe à l'étape A entre 0 et 60°C.

9. Procédé selon la revendication 8, caractérisé en ce que la température de réaction se situe à l'étape A entre 30 et 60°C.

10. Procédé selon la revendication 1, caractérisé en ce que la température de réaction se situe à l'étape C entre 100 et 140°C.

11. Procédé selon la revendication 1, caractérisé en ce qu'il est réalisé sans solvant.

12. Procédé selon la revendication 1, caractérisé en ce que l'étape A et/ou l'étape C est réalisée dans un solvant.

13. Procédé selon la revendication 1, caractérisé en ce que les réactions sont réalisées dans un solvant à point d'ébullition élevé.

14. Procédé selon la revendication 1, caractérisé en ce que les réactions sont réalisées dans un solvant aliphatique ou aromatique à point d'ébullition élevé.

15. Procédé selon la revendication 1, caractérisé en ce qu'on réalise l'étape C à pression normale ou à pression réduite.

16. Procédé selon la revendication 1, caractérisé en ce que la pression se situe à l'étape C entre 500 et 150 mbar.

17. Procédé selon la revendication 1, caractérisé en ce qu'à l'étape C les produits intermédiaires sont éliminés par distillation à une température de 100 à 170°C et une pression de 5 à 20 mbar.
